(19) Europäisches Patentamt
European Patent Office
Office européen des brevets

(11) Publication number: **0 206 799 B1**

(12) **EUROPEAN PATENT SPECIFICATION**

(45) Date of publication of patent specification: **10.04.91**

(51) Int. Cl.⁵: **B01J 41/10**

(21) Application number: **86304817.9**

(22) Date of filing: **23.06.86**

# (54) Inorganic anion exchangers and preparation thereof.

(30) Priority: **24.06.85 US 748274**

(43) Date of publication of application:
**30.12.86 Bulletin 86/52**

(45) Publication of the grant of the patent:
**10.04.91 Bulletin 91/15**

(84) Designated Contracting States:
**BE DE FR GB IT NL SE**

(56) References cited:
**US-A- 4 392 961**

**ULLMANNS ENCYKLOPÄDIE DER TECHNISCHEN CHEMIE, edition 4, vol. 13, 1977. VERLAG CHEMIE,Weinheim, New York, Page 293,294, right-hand column, line 28 - page 294, righthand column, line 54.**

(73) Proprietor: **THE DOW CHEMICAL COMPANY**
**2030 Dow Center Abbott Road P.O. Box 1967**
**Midland Michigan 48640-1967(US)**

(72) Inventor: **Clark, Howard W.**
**4117 Swede Road**
**Midland Michigan 48640(US)**

(74) Representative: **Raynor, John et al**
**W.H. Beck, Greener & Co 7 Stone Buildings**
**Lincoln's Inn**
**London WC2A 3SZ(GB)**

**EP 0 206 799 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention concerns ion exchangers and, more particularly, this invention concerns inorganic anion exchangers, a process for their preparation and their use. The present invention also is directed to a novel composition and a method for controlling colorant migration in a liquid by means of an anion exchanger material. More particularly, this invention concerns a composition and use of the composition in laundering clothes which controls and/or eliminates colorants in the water and allows differently colored clothes to be laundered together.

In the past, noncolorfast fabrics or substrates or items capable of producing colorants have been laundered with substrates or fabrics having different colors. This condition frequently resulted in colorants migrating from the noncolorfast item into the water and then onto differently colored fabrics or substrates resulting in undesirable coloring.

The use of anion exchange material for the removal of color from alkaline solution is described by Gustafson in U.S. Patent 2,561,695.

U.S. Patent 3,002,932 describes several non-crystalline inorganic anion exchangers consisting essentially of hydrated oxides of pairs of elements selected from the group consisting of aluminum, silicon, titanium, zinc, and zirconium. The compositions above are prepared by coprecipitating the hydrates of the combination of the oxides of the elements referred to above in an aqueous medium. The coprecipitation is carried out by gradually adding a base to an acid below a pH of 5 to bring the aqueous solution to a pH of about 5 to 7. The aqueous mixture is dried below about 150 °C, followed by washing the dried mixed hydrated oxide with water, and again finally drying the mixture at below about 150 °C.

In a paper by E. J. Duwell and J. W. Shepard, "The Preparation and Properties of Some Synthetic Inorganic Anion Exchangers", Journal of Physical Chemistry , volume 63, December, pages 2044-47, (1959), various amorphous inorganic anion exchangers are described. The paper describes a method for preparing an amorphous $Zn(OH)_2$ exchanger and $Al(OH)_3$ exchanger. The amorphous exchangers are prepared by coprecipitating cations of higher valence with aluminum and zinc hydroxide in slightly acidic solutions to form a gel. The gels are then dried to form white, finely divided amorphous powders of $Al(OH)_3$ and $Zn(OH)_2$.

The prior art above reports that X-ray diffraction analysis of the exchangers described indicates that the exchangers are non-crystalline or amorphous. In addition, the prior art teaches that when the exchangers are dehydrated at 150°C or higher, a crystalline product is formed and the product loses its anion exchange capacity.

Contrary to the teachings in the above prior art, the present invention provides novel inorganic mixed metal hydroxides and mixed metal hydrated oxides having a substantially crystalline structure, as shown by X-ray diffraction patterns, and exhibiting anion exchange properties. A method by which these inorganic mixed metal hydroxides and mixed metal hydrated oxides may be prepared is also shown.

One aspect of the present invention provides an anion exchanger material which comprises a substantially crystalline material exhibiting anion exchange properties represented by the formula

$$\left[ M^{a}_{1-x}\ Q^{a+1}_{x}\ O_{y}\ (OH)_{z} \right] \quad (A^{-1})_{d}(A^{-2})_{e}(A^{-3})_{f}(A^{-4})_{g}\cdot nH_{2}O \qquad (I)$$

wherein:-

M is one or more of magnesium, calcium, strontium, barium, iron, cobalt, manganese, nickel, copper, or zinc, Q is one or more of aluminum, iron, chromium, gallium, cobalt, rhenium, or indium, M has a positive valence of +2 and Q has a positive valence of +3, or

M is one or more of aluminum, iron, chromium, gallium, cobalt, rhenium, or indium, Q is one or more of titanium, germanium, tin, lead, zirconium, hafnium, or vanadium, M has a positive valence of +3 and Q has a positive valence of +4,

$A^{-1}$, $A^{-2}$, $A^{-3}$, and $A^{-4}$ are each one or more exchangeable anions each having a negative valence of 1, 2, 3, and 4, respectively; $0 < x < 0.5$; and n, y, z, d, e, f and g are real numbers greater than or equal to zero and satisfy the following:

$2y + z = a$

$0 < d + 2e + 3f + 4g \leq x$

$0 \leq n \leq 10$ provided that when $y = 0$, a is not equal to 2.

Another aspect of the present invention is a process for preparing the composition of formula (I) which comprises coprecipitating in an aqueous medium, at a constant acidic pH, inorganic mixed metal hydroxides or hydrated mixed metal oxides of metal elements, said mixed metal hydroxide or hydrated mixed metal oxides characterized as having a substantially crystalline lattice structure as shown by Xray diffraction patterns and exhibiting anion exchange properties at temperatures up to 150°C.

A further aspect of this invention is a method of controlling colorant migration in a liquid comprising contacting said liquid with a sufficient amount of the above-described composition.

The novel compositions of the present invention include complex inorganic salts of mixed metal hydroxides and partially hydrated mixed metal oxides having a crystalline lattice structure and exhibiting anion exchange properties. The compositions are essentially a combination of hydroxides and hydrated oxides of pairs of metal cations or elements. A first metal element of the pair of metal elements has a lower positive valence than that of a second metal element of the pair of metal elements. The first lower valent member has a positive valence lower by one integer than that of the second higher valent member of the pair. For example, if the first metal element has a valence of +2, the second metal element has a valence of +3, and if the first metal element has a valence of +3, then the second metal element has a valence of +4, and so on.

The first lower valent metal element of the composition of the present invention is present in a major molar amount and the second higher valent metal element is present in a minor molar amount. It is theorized that the minor constituent is substituted in the lattice structure of the major constituent. The combination of hydroxides and hydrated oxides of the pair of metal elements has a positive excess charge and this charge is balanced by an exchangeable anion or a mixture of two or more exchangeable anions.

The general formula describing the compositions of the present invention is shown by formula (I) above.

The composition for use in controlling colorant migration in a liquid comprises a detergent and an anion exchanger of formula (I).

With reference to formula (I), a "hydroxide" is represented by the formula when $y = 0$; an "oxide" is represented by the formula when $z = 0$; and a "partially hydrated oxide" is represented by the formula when y and z are both positive real numbers. A preferred composition uses an anion exchanger material wherein x is from 0.01 to 0.4. A more preferred composition is when x is from 0.1 to 0.3. A most preferred composition is when x is 0.1. A preferred composition uses an anion exchanger material wherein y is about 1 and z is about 1. Another preferred composition uses an anion exchanger material wherein y is about 1 and z is about 0.

In one embodiment, the or each metal element M has a valence of +2 and the or each metal element Q has a valence of +3. The divalent metal element M, is magnesium, calcium, strontium, barium, iron, cobalt, manganese, nickel, copper, zinc or mixtures thereof and the trivalent metal element Q, is aluminum, iron, chromium, gallium, cobalt, rhenium, indium or mixtures thereof.

In the alternative embodiment, the or each metal element M has a valence of +3 and is aluminum, iron, chromium, gallium, cobalt, rhenium, indium or mixtures thereof, and the or each metal element Q has a +4 valence, and is titanium, germanium, tin, lead, zirconium, hafnium, vanadium or mixtures thereof.

A preferred embodiment of the present invention is the pair of metal elements M and Q selected from aluminum and titanium. Preferably, the mixed metal hydroxides and mixed metal hydrated oxides of aluminum and titanium are suitable for the anion exchanger material herein described. The more preferred composition of the present invention may be represented by the following general formula:

(II)

$$\left[Al_{1-x}Ti_xO_y(OH)_z\right](A^{-1})_d(A^{-2})_e(A^{-3})_f(A^{-4})_g \cdot nH_2O$$

where $A^{-1}$, $A^{-2}$, $A^{-3}$, and $A^{-4}$ are each one or more exchangeable anions each having a negative valence of 1, 2, 3, and 4, respectively; x is $0 < x \leq 0.5$; and n, y, z, d, e, f, and g are real numbers greater than or equal to zero and satisfy the following:

$2y + z = 3$

$0 < d + 2e + 3f + 4g \leq x$

$0 \leq n \leq 10$

The "exchangeable anions" of the aforementioned compositions may be any inorganic or organic exchangeable anions commonly known in the art of anion exchangers. The exchangeable anions may be

monovalent, bivalent, trivalent and tetravalent anions or mixtures of two or more of these exchangeable anions. In the above formulas, the anion $A^{-1}$, for example, may be an inorganic anion selected from halides such as fluorides ($F^{-1}$); chlorides ($Cl^{-1}$); bromides ($Br^{-1}$) and iodides ($I^{-1}$); sulfates such as $HSO_4^{-1}$ ; phosphates such as $H_2PO_4^{-1}$ ; permanganates ($MnO_4^{-1}$ ); nitrates ($NO_3^{-1}$ ); carbonates such as $HCO_3^{-1}$ ; hydroxides ($OH^{-1}$); and mixtures thereof. For example, the anion $A^{-1}$ may be a mixture of two or more of the exchangeable anions described above such as a mixture of $Cl^{-1}$ and $HCO_3^{-1}$ . In the above formulas, the anion $A^{-2}$, for example, may be an inorganic anion selected from carbonates such as $CO_3^{-2}$ ; sulfates such as $SO_4^{-2}$ ; phosphates such as $HPO_4^{-2}$ ; and mixtures thereof. For example, the anion $A^{-2}$ may be a combination of two or more exchangeable anions described above such as a mixture of $SO_4^{-2}$ and $CO_3^{-2}$ . In the above formulas, the anion $A^{-3}$, for example, may be a phosphate such as $PO_4^{-3}$ . An example of the anion $A^{-4}$ used in the above formulas may include anions such as ethylenediaminetetraacetic acid (EDTA) and diphosphates such as

$$\begin{array}{c} (OH)_2 \quad (OH)_2 \\ O{=}P{-}CH_2{-}P{=}O \end{array} \quad .$$

Other organic exchangeable anions used in the above formulas may include, for example, stearates, formates and benzoates or mixtures thereof.

In addition to the above anions used in the present invention, the composition of the formula (I) may include a combination of two or more exchangeable anions selected from the group $A^{-1}$, $A^{-2}$, $A^{-3}$, and $A^{-4}$ as described above. For example, the compositions may include a mixture of exchangeable anions such as $Cl^{-1}$ and $CO_3^{-2}$ anions or $Cl^{-1}$ and $SO_4^{-2}$ anions. Preferably, the exchangeable anion used to form the mixed metal hydroxides and mixed metal hydrated oxides of the present invention is a chloride anion.

The total negative charge of the exchangeable anion or mixture of exchangeable anions selected for the above compositions should be sufficient to balance the excess positive charge of the combination of pairs of mixed metal oxides, hydroxides or hydrated oxides. The exchangeable anion used in the composition is present and bound, i.e., firmly incorporated, in the lattice structure of the composition. Generally, the exchangeable anion cannot be washed free of the composit composition until the exchangeable anion is exchanged for or replaced by another anion.

A preferred composition of formula (I) uses an anion exchanger material wherein $A^{-1}$ is $Cl^{-1}$, $Br^{-1}$, $F^{-1}$, $I^{-1}$, $H_2PO_4^{-1}$ or mixtures thereof and e, f, and g are zero. A more preferred composition uses an anion exchanger material wherein $A^{-1}$ is $Cl^{-1}$ and e, f, and g are zero. Another preferred composition uses an anion exchanger material wherein $A^{-2}$ is $SO_4^{-2}$ , $CO_3^{-2}$ , $HPO_4^{-2}$ or mixtures thereof and d, f and g are zero. Another more preferred composition uses an anion exchanger material wherein $A^{-2}$ is $SO_4^{-2}$ and d, f and g are zero.

The compositions of formula (I) are characterized as having a crystalline lattice structure as shown, for example, by X-ray diffraction, electron diffraction, electron microscopy and micro area X-ray analysis. For example, a mixed metal hydroxide of aluminum and titanium has substantially the following peaks in the x-ray diffraction pattern as shown in Table I:

TABLE I

| dÅ |
|---|
| 6.35 |
| 3.08 |
| 2.35 |
| 1.86 |
| 1.44 |

The compositions of formula (I) are also characterized as exhibiting anion exchange properties, i.e., anion exchange capacity, and thus are useful as anion exchangers. Generally, the anion exchangers are useful up to a temperature of 150 °C. Generally, the anion exchange capacities of the exchangers of formula (I) may range from 0.5 milliequivalent per gram (meq/g) to 2.0 meq/g and preferably from 1.0

meq/g to 1.5 meq/g. For example, the aluminum and titanium mixed metal hydroxide and mixed metal hydrated oxide may have an anion exchange capacity from 1.0 to 1.5 meq/g.

In its broadest scope, the anion exchangers of formula (I) are synthesized via controlled techniques of precipitation and drying. More particularly, the mixed metal hydroxides and mixed metal hydrated oxides are coprecipitated and then dried by evaporation. The precipitate may be filtered prior to evaporation and then washed with a solvent such as water after evaporation.

In carrying out the process of the present invention, salts or other derivatives of metal elements M and Q of the anion exchanger of formula (I) are dissolved in a solvent such as water. Preferably, the stoichiometric ratio of Q/M should be above zero to 0.5. The total concentration of M and Q used in solution may be above 0.1 molar and preferably above 0.5 molar. The salts used are preferably acidic, and which on neutralization with a base, precipitate the hydroxides or hydrated oxides of metals M and Q. Water-soluble salts or water-insoluble salts may be used. The water-soluble salts used may include, for example, salts of chlorides ($Cl^{-1}$), sulfates ($SO_4^{-2}$), nitrates ($NO_3^{-1}$), carbonates ($CO_3^{-2}$) and mixtures thereof of the metals M and Q. Water-insoluble salts used may include hydroxides such as aluminum hydroxide and magnesium hydroxides. Preferably, the water-soluble salts of elements M and Q are used. Examples of water-soluble salts of aluminum usable herein may include aluminum chloride, aluminum oxalate, aluminum nitrate and aluminum sulfate. Preferably, aluminum chloride is used because it is readily available. Examples of water-soluble salts of titanium usable herein may include titanium tetrachloride and titanium sulfate. Preferably, titanium tetrachloride is used because it is readily available and relatively inexpensive.

The base used for neutralization and consequent coprecipitation of the hydroxide and hydrated oxides are, preferably, the alkali metal hydroxides such as sodium hydroxide or potassium hydroxide. Other useful bases include, for example, ammonium hydroxide or calcium hydroxide.

Coprecipitation of the mixed metal hydroxides and hydrated mixed metal oxides of formula (I) is carried out, preferably, by a continuous process. An aqueous solution containing the dissolved derivatives of metals M and Q is substantially simultaneously contacted with the base such that the coprecipitation reaction solu tion is maintained at a substantially constant pH. The pH for the reaction is kept substantially constant until the desired precipitation is obtained. The pH for the reaction may lie in the range of 3 to 7.5, and preferably in the range of 4 to 7. More preferably, a pH of 6 may be selected to carry out the precipitation and once the reaction begins, the pH of the reaction solution is, preferably, maintained at a pH of 6±1. The precipitation may be carried out at a temperature of from 50° C to 150° C, preferably from 50° C to 100° C, and more preferably from 70° C to 90° C.

A precipitate material of uniform particle size containing a substantial quantity of solvent such as water is formed when the hydroxides and hydrated oxides are precipitated. The major portion of the water used as the solvent may be readily separated or removed from the precipitate, for example, by filtration techniques known in the art. The precipitate of uniform particle size formed in the present process is an improvement over the bulky, gelatinous material formed during precipitation of hydrated oxides or hydroxides of prior art methods because the precipitate of uniform particle size is easier to filter and handle. In addition, after the uniform particle size precipitate is dried it forms a white, free-flowing, fine powdery product having a uniform size and shape.

After separating the precipitate material from the aqueous media, the material is then dried in air by heating at relatively low temperatures to remove the water in the material. Temperatures below 150° C are used to dry the material and preferably, a temperature of 50° C to below 150° C. More preferably, the material may be dried at a temperature in the range of 100° C to below 150° C. After drying or dehydrating the material, the resulting dried product is characterized as having a crystalline lattice structure as shown by X-ray diffraction patterns. The dried product is also characterized as having anion exchange capacities and may now be used an anion exchanger. The dried product, preferably, may be washed free of impurities which may be present in the material. For example, impurities such as sodium chloride and hydrochloric acid may be removed with water such as distilled or deionized water. Removal of such impurities is preferably carried out with water at a pH of from 4 to 7. The washed material is then suitable for use as an anion exchanger. The washed material may be filtered and used as an anion exchanger in a wet filter cake form or the washed material may be redried at the temperatures described above and used as an anion exchanger in a powder form.

Typically, the powder form of the anion exchanger produced by the process of the present invention may contain solids having a particle size of 10 microns or less. Preferably, the powder may have solids with a particle size of 5 microns or less. The powder particles may easily be broken up into individual particles having a size of from 0.1 micron to 0.4 micron or less by techniques known in the art such as grinding. The crystalline anion exchanger product produced by the present invention has a uniform and relatively larger particle size than the amorphous material of the prior art and, thus, the crystalline anion exchanger is

relatively easier to handle and prepare in a desired form such as pellets.

The anion exchanger material produced by the present invention may be used as an exchanger alone, or in combination with other additives which are not detrimental to the anion exchange capacity of the anion exchanger. Other materials or phases which may be mixed with the exchangers may include, for example, fillers such as clays; binders such as cellulosic polymers, in particular, carboxymethylcellulose; and extenders such a $TiO_2$, $Al_2O_3$ and $Al(OH)_3$ which will not substantially adversely affect the anion exchange capacity of the exchanger. Other additives may be used, for example, to pelletize, agglomerate or coat the exchanger, provided the anio n exchange capacity of the exchanger is not substantially reduced. The various additives used with the anion exchanger will depend on the application in which the exchanger is used.

The anion exchange material of formula (I) may be used in any application wherein an anion exchange mechanism is desired. Applications in which the exchanger is particularly useful include, for example, removing unwanted anions from aqueous systems such as removing chromates and dichromates from water waste streams or removing silicates and colloidal silica from industrial boiler systems.

Another application of the anion exchanger of formula (I) is in laundry detergents as an additive for removing undesirable dye migration from one article of clothing to another. Still another application for using the anion exchanger involves removing sulfonated polystyrene from corn syrup by passing the syrup over as ion exchage column containing the anion exchanger of formula (I). Yet another application in which the anion exchanger may be used is in forming pigments by mixing the anion exchanger with a dye.

Another aspect of this invention is a method of controlling migration in a liquid comprising contacting said liquid with a sufficient amount of the above described composition. Preferably, a sufficient amount of said composition is used such that substantially all of the colorant is removed from the liquid. A preferred method would be to admix the composition with the liquid. The composition may be used to control colorant in any liquid. A preferred method would be to use the composition in a substantially aqueous solution and more preferably in water.

The composition may be preferably used in water containing differently colored textile materials and even more preferaby used in water containing undesirable colorant and textile materials of a color substantially different from the color of said undesirable colorant. Preferably, the composition may be used wherein the colorant is a dye.

The anion exchanger material may be combined with a soap, detergent or preferably with a laundry soap formulation. Preferably, the soap or detergent composition is suitable for washing textile articles.

Further additives which are usually included in synthetic soap or detergent compositions are bleaching agents, dirt-suspending agents, builders, fillers, optical brightening agents, enzymes and mild perfumes.

Suitable bleaching agents which may be used include percarbonates or persulphates or, more usually, alkali metal perborates. Suitable fillers include alkali metal sulphates, silicates and phosphates; a dirt-suspending agent which is often used is carboxymethylcellulose. Conventional optical brighteners are those of the triazinyl-diamino-stilbene disulphonic acid, pryazoline, imidazolone, benzidine sulphone bisoxazole, distyryl diphenyl or dibenzimidazole types. Enzymes which are frequently used are those containing predominately a protease product from a spore-forming Bacillus subtilis bacteria. A suitable perfume is one having a citrus, cologne or pine base.

The present invention described broadly above is now illustrated more specifically by the following examples which are not to be construed as limiting the scope of the invention.

Example 1

An acidic solution was made by diluting 25 liters of a 28 weight percent (wt.%) $AlCl_3$ solution to 60 liters total volume with water. In addition, a $TiCl_4$ solution was made by slowly adding 800 ml of $TiCl_4$ to 2000 ml of water to obtain a clear solution. The $TiCl_4$ solution was then added to the $AlCl_3$ solution to form an $AlCl_3$-$TiCl_4$ solution. A base solution was made by dissolving 9,000 g of NaOH in 60 liters of water. Then the following controlled precipitation method was carried out.

The $AlCl_3$-$TiCl_4$ solution and the base solution were fed simultaneously into a 10 liter glass reactor w hile stirring. The $AlCl_3$-$TiCl_4$ solution was introduced into the reactor at 100 ml/min and the base solution was intorduced into the reactor at a feed rate sufficient to maintain the solution at a pH of about 6.0. The temperature of the reactor mixture was kept at 90 °C. The reactor mixture was stirred continuously at a stirring rate of 750 rpm. The first three reactor volumes of the resulting reaction product were discarded and the remainder of the product was collected and filtered. The filtered product was then dried at 120 °C in an oven overnight. Thereafter, the dried product was washed with deionized water and then redried at 120 °C

in the oven for three hours.

A white, free-flowing powdery product was obtained having a substantially crystalline structure, a uniform particle size of approximately 0.2 micron and an exchange capactiy of 1.0 meq/g. The approximate composition of the product was $[Al_{0.9}Ti_{0.1}O(OH)]Cl_{0.1} \bullet nH_2O$. By X-ray diffraction analysis, the product showed the following peaks in the diffraction pattern:

| dÅ |
|---|
| 6.35 |
| 3.08 |
| 2.35 |
| 1.86 |
| 1.44 |

Example 2

An acidic solution was made by diluting 25 liters of a 28 wt.% $AlCl_3$ solution to 60 liters total volume with water. In addition, a $TiCl_4$ solution was made by adding 3200 ml of $TiCl_4$ to 4000 ml of water to obtain a clear solution. The $TiCl_4$ solution was added to the previously prepared $AlCl_3$ solution to form an $AlCl_3$-$TiCl_4$ solution. A base solution was made by dissolving 9000 g of NaOH in 60 liters of water. Then the following precipitation reaction was carried out:

The $AlCl_3$-$TiCl_4$ solution and the base solution were fed simultaneously into a 10 liter glass reactor with stirring. The $AlCl_3$-$TiCl_4$ solution was added at a rate of 100 ml/min and the base solution was added at a rate which maintained the pH at about 6.0. The temperature of the reaction was kept at 90°C. The first three reactor volumes were discarded and the remainder of the product was collected, filtered, and dried at 120°C in an oven overnight. The dried product was then washed with water and redried at 120°C for three hours.

A white, free-flowing powder was obtained, having a substantially crystalline structure, a uniform particle size of approximately 0.2 micron and an exchange capacity of 1.7 meq/g. The approximate composition of the product was $[Al_{0.6}Ti_{0.4}O(OH)]\ Cl_{0.4} \bullet nH_2O$.

Example 3

An acidic solution was made by diluting 25 liters of a 28 wt.% $AlCl_3$ solution to 60 liters total volume with water. In addition, a $TiCl_4$ solution was made by adding 400 ml to $TiCl_4$ to 2000 ml of water to obtain a clear solution. The $TiCl_4$ solution was added to the previously prepared $AlCl_3$ solution to form an $AlCl_3$-$TiCl_4$ solution. A base solution was made by dissolving 9000 g of NaOH in 60 liters of water. Then the following precipitation reaction was carried out:

The $AlCl_3$-$TiCl_4$ solution and the base solution were fed simultaneously into a 10 liter glass reactor with stirring. The $AlCl_3$-$TiCl_4$ solution was added at a rate of 100 ml/min and the base solution was added at a rate which maintained the pH at about 6.0. The temperature of the reaction was kept at 90°C. The first three reactor volumes were discarded and the remainder of the product was collected, filtered, and dried at 120°C in an oven overnight. The product was then washed with water and redried at 120°C for three hours.

A white, free-flowing powder was obtained, having a substantially crystalline structure, a uniform particle size of approximately 0.2 micron and an exchange capacity of 0.5 meq/g. The approximate composition of the product was $[Al_{0.95}Ti_{0.05}O(OH)]Cl_{0.05} \bullet nH_2O$.

Example 4

An acidic solution was made by diluting 25 liters of a 28 wt.% $AlCl_3$ solution to 60 liters total volume with water. In addition, a $TiCl_4$ solution was made by adding 1600 ml of $TiCl_4$ to 2000 ml of water to obtain a clear solution. The $TiCl_4$ solution was added to the previously prepared $AlCl_3$ solution to form an $AlCl_3$-

$TiCl_4$ solution. A base solution was made by dissolving 9000 g of NaOH in 60 liters of water. Then the following precipitation reaction was carried out:

The $AlCl_3$-$TiCl_4$ solution and the base solution were fed simultaneously into a 10 liter glass reactor with stirring. The $AlCl_3$-$TiCl_4$ solution was added at a rate of 100 ml/min and the base solution was added at a rate which maintained the pH at about 6.0. The temperature of the reaction was kept at 90° C. The first three reactor volumes were discarded and the remainder of the product was collected, filtered, and dried at 120° C in an oven overnight. The product was then washed with water and redried at 120° C for three hours.

A white, free-flowing powder was obtained, having a substantially crystalline structure, a uniform particle size of approximately 0.2 micron and an exchange capacity of 1.5 meq/g. The approximate composition of the product was $[Al_{0.8}Ti_{0.2}O(OH)]Cl_{0.2} \bullet nH_2O$.

Example 5

A 100 g portion of the product, $[Al_{0.8}Ti_{0.2}O(OH)]Cl_{0.2} \bullet nH_2O$, prepared in Example 4 was suspended in 200 ml of water with stirring. A 100 meq sample of KI dissolved in 100 ml of water was then addded to the suspension. The solid mixture was filtered, washed, dried at 120° C in an oven and then analyzed for $I^-$. The composition of the product was determined to be $[Al_{0.8}Ti_{0.2}O(OH)]Cl_{0.18}I_{0.02} \bullet nH_2O$.

Example 6

A piece of 2 x 2 inch (5 x 5 cm) white cotton cloth was put into a glass vessel along with 5 grams of an anion exchange hydrous oxide of the formulation $[Al_{0.9}Ti_{0.1}O(OH)]Cl_{0.1} \bullet nH_2O$ (Example 1) and 1.0 gram Tide brand laundry detergent in 1000 ml of water. The mixture was stirred rapidly and a 100 ml solution of Ritz brand yellow cloth dye was added rapidly. After two minutes the cloth sample was removed, rinsed and dried. The entire procedure was repeated without the anion exchange additive. The result was that the cloth square with no additive showed significant dye coloration which could not be removed by rinsing. The cloth square which was in the anion exchange additive was just slightly off white with no real permanent color.

## Claims

1. An anion exchanger material which comprises a substantially crystalline material exhibiting anion exchange properties represented by the formula

$$\left[ M^{a}_{1-x} Q^{a+1}_{x} O_{y} (OH)_{z} \right] \quad (I) \quad (A^{-1})_{d}(A^{-2})_{e}(A^{-3})_{f}(A^{-4})_{g} \cdot nH_2O$$

wherein:-

M is one or more of magnesium, calcium, strontium, barium, iron, cobalt, manganese, nickel, copper, or zinc, Q is one or more of aluminum, iron, chromium, gallium, cobalt, rhenium, or indium, M has a positive valence of +2 and Q has a positive valence of +3, or

M is one or more of aluminum, iron, chromium, gallium, cobalt, rhenium, or indium, Q is one or more of titanium, germanium, tin, lead, zirconium, hafnium, or vanadium, M has a positive valence of +3 and Q has a positive valence of +4,

$A^{-1}$, $A^{-2}$, $A^{-3}$, and $A^{-4}$ are each one or more exchangeable anions each having a negative valence of 1, 2, 3, and 4, respectively; $0 < x < 0.5$; and n, y, z, d, e, f and g are real numbers greater than or egual to zero and satisfy the following:

$2y + z = a$

$0 < d + 2e + 3f + 4g \leq x$

$0 \leq n \leq 10$ provided that when $y = 0$, a is not equal to 2.

2. The anion exchanger of Claim 1 wherein x is from 0.01 to 0.4.

**3.** The anion exchanger of Claim 1 or Claim 2 wherein y is about 1 and z is about 1 or about 0.

**4.** The anion exchanger of any preceding claim wherein M is aluminum.

**5.** The anion exchanger of any preceding claim wherein Q is titanium.

**6.** The anion exchanger of Claim 1 wherein $A^{-1}$, $A^{-2}$, $A^{-3}$, and $A^{-4}$ are each one or more anions selected from halides, hydroxides, nitrates, phosphates, carbonates, sulfates, and mixtures thereof.

**7.** The anion exchanger of any of Claims 1 to 6 wherein $A^{-1}$ is $C1^{-1}$, $Br^{-1}$, $F^{-1}$, $I^{-1}$, $H_2PO_4^{-1}$ or mixtures thereof and e, f, and g are 0.

**8.** The anion exchanger of any of Claims 1 to 6 wherein $A^{-2}$ is $so_4^{-2}$ , $CO_3^{-2}$ , $HPO_4^{-2}$ or mixtures thereof and d, f, and g are 0.

**9.** The anion exchanger of any of Claims 1 to 6 wherein $A^{-1}$ is $C1^{-1}$ , $A^{-2}$ is $so_4^{-2}$ and f and g are 0.

**10.** The anion exchanger of Claim 1 represented wherein M is aluminum and Q is titanium.

**11.** The anion exchanger of Claim 10 which is:
$[A1_{0.9}Ti_{0.1}O(OH)]C1_{0.1}.nH_2O$,
$[A1_{0.6}Ti_{0.4}O(OH)]C1_{0.4}.nH_2O$,
$[A1_{0.95}Ti_{0.05}O(OH)]C1_{0.05}.nH_2O$,
$[A1_{0.8}Ti_{0.2}O(OH)]C1_{0.2}.nH_2O$, or
$[A1_{0.8}Ti_{0.2}O(OH)]C1_{0.18}I_{0.02}.nH_2O$.

**12.** A process for preparing the anion exchanger of Claim 1 which comprises coprecipitating in an agueous medium at constant acidic pH inorganic mixed metal hydroxides or hydrated mixed metal oxides of metal elements, said mixed metal hydroxide or hydrated oxide having a substantially crystalline structure as shown by X-ray diffraction patterns and exhibiting anion exchange properties at temperatures up to 150° C.

**13.** A composition comprising a detergent and an anion exchanger material of formula (I) as defined in any one of Claims 1 to 11.

**14.** A method of controlling colorant migrations in a liquid, comprising contacting said liquid with an anion exchanger as claimed in any one of Claims 1 to 11.

## Revendications

**1.** Matière échangeuse d'anions qui est constituée par une matière pratiquement cristalline présentant des propriétés d'échange d'anions et représentée par la formule

$$[M^{a}_{1-x}Q^{a+1}_{x}\ O_y\ (OH)_z]\ (A^-)_d(A^{2-})_e(A^{3-})_f(A^{4-})_g\ .\ nH_2O \qquad (I)$$

dans laquelle :

M est constitué par un ou plusieurs des éléments magnésium, calcium, strontium, baryum, fer, cobalt, manganèse, nickel, cuivre ou zinc, Q est constitué par un ou plusieurs des éléments aluminium, fer, chrome, gallium, cobalt, rhénium ou indium, M a une valence positive égale à +2 et Q a une valence positive égale à +3,

ou M est constitué par un ou plusieurs des éléments aluminium, fer, chrome, gallium, cobalt, rhénium ou indium, Q est constitué par un ou plusieurs des éléments titane, germanium, étain, plomb, zirconium, hafnium ou vanadium, M a une valence positive égale à +3 et Q a une valence positive égale à +4,

$A^-$, $A^{2-}$, $A^{3-}$ et $A^{4-}$ sont constitués chacun par un ou plusieurs anions échangeables ayant chacun une valence négative respectivement égale à 1, 2, 3 et 4, tandis que $0 < x < 0{,}5$ et n, y, z, d, e, f et g

sont des nombres réels supérieurs ou égaux à zéro et remplissent les conditions suivantes :

$2y + z = a$

$0 < d + 2e + 3f + 4g \leq x$

$0 \leqq n \leqq 10$ à condition que, lorsque $y = 0$, a ne soit pas égal à 2.

**2.** Echangeur d'anions suivant la revendication 1, dans lequel x vaut de 0,01 à 0,4.

**3.** Echangeur d'anions suivant la revendication 1 ou la revendication 2, dans lequel y vaut environ 1 et z vaut environ 1 ou environ 0.

**4.** Echangeur d'anions suivant l'une quelconque des revendications précédentes, dans lequel M est l'aluminium.

**5.** Echangeur d'anions suivant l'une quelconque des revendications précédentes, dans lequel Q est le titane.

**6.** Echangeur d'anions suivant la revendication 1, dans lequel $A^-$, $A^{2-}$, $A^{3-}$ et $A^{4-}$ sont constitués chacun d'un ou plusieurs anions choisis parmi des halogénures, des hydroxydes, des nitrates, des phosphates, des carbonates, des sulfates et des mélanges de ceux-ci.

**7.** Echangeur d'anions suivant l'une quelconque des revendications 1 à 6, dans lequel $A^-$ est $C1^-$, $Br^-$, $F^-$, $I^-$, $H_2PO_4^-$ ou des mélanges de ceux-ci et e, f et g sont égaux à O.

**8.** Echangeur d'anions suivant l'une quelconque des revendications 1 à 6, dans lequel $A^{2-}$ est $SO_4^{2-}$, $CO_3^{2-}$, $HPO_4^{2-}$ ou des mélanges de ceux-ci et d, f et g sont égaux à O.

**9.** Echangeur d'anions suivant l'une quelconque des revendications 1 à 6, dans lequel $A^-$ est $C1^-$, $A^{2-}$ est $SO_4^{2-}$ et f et g sont égaux à O.

**10.** Echangeur d'anions suivant la revendication 1, présentant la formule représentée dans laquelle M est l'aluminium et Q est le titane.

**11.** Echangeur d'anions suivant la revendication 10, qui est :

$$[Al_{0,9}Ti_{0,1}O(OH)]Cl_{0,1}\cdot nH_2O$$

$$[Al_{0,6}Ti_{0,4}O(OH)]Cl_{0,4}\cdot nH_2O$$

$$[Al_{0,95}Ti_{0,05}O(OH)]Cl_{0,05}\cdot nH_2O$$

$$[Al_{0,8}Ti_{0,2}(O(OH)]Cl_{0,2}\cdot nH_2O \text{ ou}$$

$$[Al_{0,8}Ti_{0,2}O(OH)]Cl_{0,18}I_{0,02}\cdot nH_2O$$

**12.** Procédé permettant de préparer l'échangeur d'anions de la revendication 1, qui consiste à faire coprécipiter, dans un milieu aqueux et à un pH acide constant, des hydroxydes de métaux mélangés ou oxydes hydratés de métaux mélangés, inorganiques d'éléments formés de métaux, ces hydroxydes de métaux mélangés ou oxydes hydratés de métaux mélangés présentant une structure pratiquement cristalline, ainsi que le montrent les diagrammes de diffraction des rayons X, et possédant des propriétés d'échange d'anions à des températures s'élevant jusqu'à 150° C.

**13.** Composition comprenant un détergent et une matière échangeuse d'anions de formule (1), telle que définie dans l'une quelconque des revendications 1 à 11.

**14.** Procédé permettant de maîtriser les migrations des colorants dans un liquide, consistant à mettre ce liquide au contact d'un échangeur d'anions suivant l'une quelconque des revendications 1 à 11.

## Ansprüche

1. Anionenaustauschmaterial , enthaltend ein im wesentlichen kristallines Material , das anionenaustauschende Eigenschaften aufweist und der Formel genügt:

$$\left[ M^a_{1-x} Q^{a+1}_x O_y (OH)_z \right] (A^{-1})_d (A^{-2})_e (A^{-3})_f (A^{-4})_g \cdot nH_2O \quad (I)$$

in der M ein oder mehrere von Magnesium, Kalzium, Strontium, Barium, Eisen, Kobalt, Mangan, Nickel, Kupfer oder Zink ist, Q ein oder mehrere von Aluminium, Eisen, Chrom, Gallium, Kobalt, Rhenium oder Indium ist, M eine positive Wertigkeit von +2 und Q eine positive Wertigkeit von +3 hat oder
M ein oder mehrere von Aluminium, Eisen, Chrom, Gall'ium, Kobalt, Rhenium oder Indium ist, Q ein oder mehrere von Titan, Germanium, Zinn, Blei , Zirkon, Hafnium oder Vanadium ist, M eine positive Wertigkeit von + 3 und Q eine positive Wertigkeit von +4 hat,
$A^{-1}$ , $A^{-2}$ , $A^{-3}$ und $A^{-4}$ jeweils ein oder mehrere austauschbare Anionen sind, die jeweils eine negative Wertigkeit von 1, 2, 3 und 4 aufweisen, $0 < x < 0,5$ ist und n, y, z, d, e, f und g reale Zahlen größer oder gleich Null sind und dem Folgenden genügen:
$2y + z = a$
$0 < d + 2e + 3f + 4g \leq x$
$0 \leq n \leq 10$ unter der Bedingung, daß, wenn $y = 0$ ist, a nicht gleich 2 ist.

2. Anionenaustauscher nach Anspruch 1,
**dadurch gekennzeichnet,**
daß x von 0,01 bis 0,4 ist.

3. Anionenaustauscher nach Anspruch 1 oder 2,
**dadurch gekennzeichnet,**
daß y etwa 1 ist und z etwa 1 oder etwa 0 ist.

4. Anionenaustauscher nach jedem der vorstehenden Ansprüche,
**dadurch gekennzeichnet,**
daß M Aluminium ist.

5. Anionenaustauscher nach jedem der vorstehenden Ansprüche,
**dadurch gekennzeichnet,**
daß Q Titan ist.

6. Anionenaustauscher nach Anspruch 1,
**dadurch gekennzeichnet,**
daß $A^{-1}$ , $A^{-2}$ , $A^{-3}$ und $A^{-4}$ jeweils ein oder mehrere Anionen sind, ausgewählt aus Halogenen, Hydroxiden, Nitraten, Phosphaten, Carbonaten, Sulfaten und Mischungen derselben.

7. Anionenaustauscher nach jedem der Ansprüche 1 bis 6,
**dadurch gekennzeichnet,**
daß $A^{-1}$ $C1^{-1}$ , $Br^{-1}$ , $F^{-1}$ ,$I^{-1}$ , $H_2 PO_4^{-1}$ oder Mischungen derselben ist und e, f und g Null sind.

8. Anionenaustauscher nach jedem der Ansprüche 1 bis 6,
**dadurch gekennzeichnet,**
daß $A^{-2}$ $SO_4^{-2}$ $CO_3^{-2}$, $HPO_4^{-2}$ oder Mischungen derselben ist und d, f und g Null sind.

9. Anionenaustauscher nach jedem der Ansprüche 1 bis 6,
**dadurch gekennzeichnet,**
daß $A^{-1}$ C1 ist, $A^{-2}$ $SO_4^{-2}$ ist und f und g Null sind.

**10.** Anionenaustauscher nach Anspruch 1,
**dadurch gekennzeichnet,**
daß M Aluminium und Q Titan ist.

**11.** Anionenaustauscher nach Anspruch 10,
**dadurch gekennzeichnet,**
daß er
$[A1_{0.9}Ti_{0.1}O)(OH)]C1_{0.1}.nH_2O$,
$[A1_{0.6}Ti_{0.4}O(OH)]C1_{0.4}.nH_2 O$,
$[A1_{0.95}Ti_{0.05}O(OH)]c1_{0.05}.nH_2O$,
$[A1_{0.8}Ti_{0.2}O(OH)]C1_{0.2}.nH_2O$, or
$[A1_{0.8}Ti_{0.2}O(OH)]C1_{0.18}I_{0.02}.nH_2O$ ist.

**12.** Verfahren zum Herstellen des Anionenaustauschers nach Anspruch 1 durch gleichzeitiges Ausfällen in wäßrigem Medium bei konstantem sauren pH anorganischer, gemischter Metallhydroxide oder wasserhaltiger, gemischter Metalloxide von Metallelementen, wobei die gemischten Metallhydroxide oder wasserhaltigen Oxide im wesentlichen eine durch Röntgenbeugungsdiagramm sichtbar zu machende kristalline Struktur haben und anionenaustauschende Eigenschaften bei Temperaturen bis zu 150°C aufweisen.

**13.** Zusammensetzung enthaltend ein Waschmittel und ein Anionenaustauschermaterial der Formel (1) nach jedem der Ansprüche 1 bis 11.

**14.** Verfahren zum Steuern von Farbstoffmigrationen in einer Flüssigkeit durch Inberührungbringen der Flüssigkeit mit einem Anionenaustauscher nach jedem der Ansprüche 1 bis 11.